# EUROPÄISCHE PATENTANMELDUNG

(11) **EP 2 845 482 A1**
(43) Veröffentlichungstag der Anmeldung: **11.03.2015**
(21) Anmeldenummer: 14172293.4
(22) Anmeldetag: 13.06.2014
(51) Int. Cl.: A21B 1/04, F23B 40/02

(54) **Backofenvorrichtung**

(30) Priorität: 18.07.2013 DE 102013214120
(71) Anmelder: Fritsch GmbH, 97348 Markt Einersheim (DE)
(72) Erfinder: Kögel, Thomas, 97318 Kitzingen (DE)
(74) Vertreter: advotec.

(57) **Zusammenfassung**

Die Erfindung betrifft eine Backofenvorrichtung (01) zum Backen von Holzofenbrot, mit einem Backraum (03), dessen Wandung (04) zumindest zum überwiegenden Teil von einem steinernen oder steinartigen Material gebildet wird, wobei der Backraum (03) durch die bei der Verbrennung von stückigem Holzbrennstoff (41) entstehenden Flammen und Rauchgase unmittelbar beheizt werden kann, und wobei der Backraum (03) zumindest eine Ofentür (05) aufweist, durch die die Brotteiglinge in den Backraum (03) eingebracht werden können, und wobei der Backraum (03) zumindest eine Rauchgasöffnung (08) aufweist, durch die verbrauchtes Rauchgas aus dem Backraum (03) abgeleitet werden kann, wobei die Backofenvorrichtung (01) eine Zündvorrichtung (38) umfasst, mit der die Holzbrennstoffstücke (42) zumindest beim Anheizen der Backofenvorrichtung (01) entzündet werden können, und wobei die Backofenvorrichtung (01) eine Fördereinrichtung (31) umfasst, mittels der die entzündeten Holzbrennstoffstücke (43) im brennenden Zustand durch eine Einlassöffnung (07) in den Backraum (03) eingefördert und/oder verteilt werden können.

## Beschreibung

Die Erfindung betrifft eine Backofenvorrichtung zum Backen von Holzofenbrot gemäß dem Oberbegriff des Anspruchs 1.

Aus dem Stand der Technik sind verschiedene Ausführungsformen von Backofenvorrichtungen zum Backen von Holzofenbrot bekannt. Wesentliche Vorraussetzung für die Bezeichnung "Holzofenbrot" ist das Backen in einem Backraum, dessen Wandung aus einem steinernen oder steinartigen Material besteht und durch die Verbrennung eines Holzbrennstoffes beheizt wird.

In althergebrachter Weise wird zur Aufheizung der Wandung des Backraums Holz in Form von Holzscheiden durch die bei jedem Backofen vorhandene Ofentür in den Backraum eingebracht und verbrennt dort unter Bildung von Asche und Rauchgasen. Nach Erreichen der erforderlichen Temperatur der Wandung bei Abbrennen des eingebrachten Holzes wird die Asche entfernt und sodann kann das entsprechende Holzofenbrot gebacken werden. Da das vor dem Backen des Holzofenbrotes erforderliche Einschichten des Holzes einen hohen Aufwand verursacht und zudem konstante Backparameter nicht erreichbar sind, ist eine derartige Herstellung nicht wirtschaftlich realisierbar.

Im Gegensatz zur traditionellen Methode wird im regulär verwendeten Stand der Technik zur Herstellung von Holzofenbrot eine Ausführung eingesetzt, die auf das Abbrennen des Holzes im Backraum verzichtet. Anstelle dessen erfolgt das Abbrennen von Holzbrennstoff außerhalb des Backraums, wodurch eine wirtschaftliche Herstellung ermöglicht wird. Hierbei wird eine Brennervorrichtung eingesetzt, die ähnlich einem Pelletbrenner für gewöhnliche Heizungszwecke, beispielsweise aus der Wohnraumbeheizung, ausgeführt wird. Über eine Zufuhr werden Holzpellets in eine Brennkammer gefördert, in der diese vollständig verbrannt werden. Die beim Abbrand entstehenden Rauchgase werden bei den zum Backen von Holzofenbrot eingesetzten Ausführungsformen durch den Backraum zur Aufheizung der Wandung geleitet.

Wenngleich in bekannten Ausführungsformen zur wirtschaftlichen Herstellung von Holzofenbrot die Aufheizung der Wandung des Backraums mithilfe eines Holzbrennstoffs erfolgt, entspricht diese Vorgehensweise jedoch nicht hinreichend den Vorstellungen von der Herstellung eines Holzofenbrots. Die Bezeichnung "Holzofenbrot" kann in zulässiger Weise verwendet werden, sofern das Brot gemäß den entsprechenden Leitsätzen für Brot und Kleingebäck hergestellt wurde, wobei (in der Fassung vom 19.09.2005; in Deutschland) die folgenden Anforderungen gestellt werden:
*"Holzofenbrot wird freigeschoben oder angeschoben und in direkt befeuerten Öfen hergestellt, deren Backräume aus steinernem oder steinartigem Material bestehen. Das Heizmaterial befindet sich im Backraum. Es wird nur naturbelassenes Holz als Heizmaterial verwendet. "*

Jedoch befindet sich bei den üblicherweise eingesetzten Verfahren zur Herstellung von Holzofenbrot das Heizmaterial gerade nicht **im** Backraum.

Aufgabe der vorliegenden Erfindung ist es daher, eine Backofenvorrichtung zum Backen von Holzofenbrot zu entwickeln, welche zum einen die Anforderung an das Abbrennen des Holzbrennstoffs im Backraum erfüllt und zudem eine wirtschaftliche Herstellung des Holzofenbrotes ermöglicht.

Die gestellte Aufgabe wird durch eine erfindungsgemäße Ausführungsform nach der Lehre des Anspruchs 1 gelöst. Ein erfindungsgemäßes Verfahren zur Aufheizung einer Backofenvorrichtung zum Backen von Holzofenbrot ist in Anspruch 14 angegeben.

Vorteilhafte Ausführungsformen sind Gegenstand der Unteransprüche.

Die gattungsgemäße Backofenvorrichtung zum Backen von Holzofenbrot weist zunächst einmal einen Backraum auf, dessen Wandung zumindest zum überwiegenden Teil von einem steinernen oder steinartigen Material gebildet wird. Der Backraum weist - wie bei allen Backöfen üblich - zumindest eine Ofentür auf, durch die die Brotteiglinge in den Backraum eingebracht werden können. Der Backraum der Backofenvorrichtung kann durch die bei der Verbrennung von stückigem Holzbrennstoff entstehenden Flammen und Rauchgase unmittelbar beheizt werden, wodurch eine entsprechende Wärmespeicherung in der Wandung des Backraums stattfindet. Zur Ableitung der beim Abbrennen des Holzbrennstoffs entstehenden Rauchgase weist die Backofenvorrichtung in der Wandung des Backraums zumindest eine Rauchgasöffnung auf, durch die entsprechend verbrauchtes Rauchgas aus dem Backraum abgeleitet werden kann.

Grundsätzlich ist es sowohl für die gattungsgemäße als auch für die erfindungsgemäße Ausführung nebensächlich, ob die Backofenvorrichtung zum Backen von Holzofenbrot oder anderen Broten oder Brötchen oder sonstigen Teiglingen verwendet wird. Ebenso ist es zunächst unerheblich, ob die Wandung aus einem steinernen bzw. steinartigen Material besteht, sofern sichergestellt ist, dass die Wandung die erforderliche Wärmespeicherfunktion erfüllen kann. Auch der Einsatz von Holzbrennstoff ist nicht zwingend bei Verwendung der gattungsgemäßen oder erfindungsgemäßen Ausführung, sondern es wäre ebenso möglich, Pellets auf Basis eines anderen brennbaren Stoffes (z.B. Papier, Stroh) oder Kohle oder einen sonstigen stückigen Brennstoff einzusetzen. Jedoch verursachen sowohl die gattungsgemäßen Ausführungsformen als auch die erfindungsgemäße Ausführungsform im Gegensatz zu sonstigen üblichen Backöfen zum einen höhere Herstellungskosten und verursachen zum anderen längere Zykluszeiten zur Herstellung der Brote. Daher ist eine wirtschaftliche Anschaffung und deren Betrieb nur sinnvoll, wenn mit Hilfe der Backofenvorrichtung hochpreisige Holzofenbrote hergestellt werden, was eine entsprechende Ausführung der Backofenvorrichtung - wie zuvor beschrieben - erfordert.

Weiterhin weist die Backofenvorrichtung eine Zündvorrichtung auf, mittels der die Holzbrennstoffstücke zumindest beim Anheizen der Backofenvorrichtung entzündet werden können. Somit bedarf es keines händischen Entzündens des Holzbrennstoffs zu Beginn des Prozesses.

Wesentlich für die erfindungsgemäße Ausführung ist das Vorhandensein einer Fördereinrichtung, mittels der die entzündeten Holzbrennstoffstücke in brennendem Zustand durch eine Einlassöffnung in den Backraum eingefördert und/oder verteilt werden können. Das heißt, dass zwar der stückige Holzbrennstoff außerhalb des Backraums entzündet wird, jedoch der Abbrand der brennenden Holzbrennstoffstücke im Backraum stattfinden kann. Dies wird ermöglicht durch die neu geschaffene Ausführung mit der Fördereinrichtung zum Transport brennender Holzbrennstoffstücke durch die Einlassöffnung in den Backraum.

Nicht zwingend erforderlich ist es, dass jedes der Holzbrennstoffstücke zunächst entzündet und nachfolgend im brennenden Zustand in den Backraum eingefördert wird, sofern zumindest ein Teil der der Backofenvorrichtung zugeführten Menge an Holzbrennstoffstücken im Backraum abbrennen kann. Das heißt, die Fördervorrichtung kann zumindest einen nennenswerten Teil der entzündeten brennenden Holzbrennstoffstücke in den Backraum befördern. Besonders vorteilhaft ist es, wenn zumindest der mehrheitliche Teil der Brennstoffstücke im brennenden Zustand in den Backraum befördert wird. Somit wird weitestgehend der Vorstellung entsprochen, dass das Abbrennen des Holzbrennstoffs tatsächlich im Backraum stattfindet und nicht wie ansonsten im Stand der Technik üblich außerhalb des Backraums durchgeführt wird.

Zur Entzündung der anfänglich eingeförderten Holzbrennstoffstücke ist es vorteilhaft, wenn die Zündvorrichtung in Art eines kontaktlosen Keramikzünders ausgeführt wird. Somit kann auf eine bewährte Technik zur Entzündung von stückigem Holzbrennstoff zurückgegriffen werden.

Zur Entzündung der eingeförderten Holzbrennstoffstücke ist es weiterhin besonders vorteilhaft, wenn vor der Einlassöffnung eine Zündkammer angeordnet wird. Hierbei werden die zunächst nicht brennenden Holzbrennstoffstücke von einer zweiten Fördervorrichtung aus einem Brennstoffvorrat in die Zündkammer eingefördert. Die Zündvorrichtung ist hierbei derart an der Zündkammer anzuordnen, dass eine Entzündung der zugeführten Holzbrennstoffstücke in der Zündkammer erfolgen kann.

Nicht erforderlich ist es, dass sämtliche eingeförderten Holzbrennstoffstücke von der Zündvorrichtung entzündet werden. In besonders vorteilhafter Weise wird die Zündkammer sowie insbesondere die erste Fördervorrichtung derart ausgelegt, dass sich in der Zündkammer eine gewisse Menge von brennenden Holzbrennstoffstücken ansammeln kann, so dass durch die in der Zündkammer bereits vorhandenen brennenden Holzbrennstoffstücke eine Entzündung nachfolgender Holzbrennstoffstücke erfolgen kann.

Durch die erste Fördervorrichtung erfolgt der Transport der brennenden Holzbrennstoffstücke aus der Zündkammer in den Backraum. Hierbei muss nicht zwingenderweise eine vollständige Auskehrung der in der Zündkammer befindlichen brennenden Holzbrennstoffstücke erfolgen, sofern von der Menge der in der Zündkammer befindlichen brennenden Holzbrennstoffstücke ein entsprechender, vorteilhafterweise mehrheitlicher Anteil in den Backraum befördert wird.

Zum Transport von brennenden Holzbrennstoffstücken ist es besonders vorteilhaft, wenn als erste Fördervorrichtung ein Gebläse eingesetzt wird, wobei die brennenden Holzbrennstoffstücke durch die vom Gebläse erzeugte Luftströmung in den Backraum geblasen werden können. Das heißt, dass die Holzbrennstoffstücke nach deren Entzündung von der vom Gebläse erzeugten Luftströmung erfasst und mit der Luftströmung in freiem Flug durch die Einlassöffnung in den Backraum befördert werden können.

Bei Einsatz einer Zündkammer ist es hierbei vorteilhaft, wenn an der dem Backraum abgewandten Stirnseite der Zündkammer erste Luftströmungsöffnungen vorhanden sind. Diese sind hierbei derart anzuordnen, dass die in die Zündkammer eintretende Luftströmung möglichst unmittelbar auf die oberste Lage der angesammelten brennenden Holzbrennstoffstücke trifft und/oder darüber hinweg streicht und in Richtung Einlassöffnung gerichtet ist. Hierbei ist in vorteilhafter Weise die Zündvorrichtung in einer Luftströmungsöffnung angeordnet, so dass die Luftströmung die Zündvorrichtung umströmt.

Zur Auflockerung der eingeförderten Holzbrennstoffstücke sowie zur Begünstigung deren Entzündung in der Zündvorrichtung durch bereits brennende Holzbrennstoffstücke ist es weiterhin vorteilhaft, wenn an der Unterseite der Zündkammer zweite Luftströmungsöffnungen vorhanden sind, welche eine entsprechende Strömung in die Zündkammer hinein ermöglichen.

Zur Realisierung einer vorteilhaften Flugbahn der brennenden Holzbrennstoffstücke aus der Zündkammer in den Backraum ist es vorteilhaft, wenn dritte Luftströmungsöffnungen am zum Backraum weisenden Ende der Zündkammer angeordnet werden, welche eine Luftströmung quer zur Luftströmung in Richtung Einlassöffnung bewirken können. Ein durch diese dritten Luftströmungsöffnungen eintretender Luftstrom kann hierbei verhindern, dass die transportierten sich im Flug befindlichen brennenden Holzbrennstoffstücke vor dem Austreten aus der Zündvorrichtung an der Wandung der Zündkammer anschlagen und eine unkontrollierte Flugbahn einnehmen und sich beispielsweise unmittelbar hinter der Einlassöffnung im Backraum ansammeln.

Eine weitere Beeinflussung der Flugbahn der brennenden Holzbrennstoffstücke kann erreicht werden, wenn vierte Luftströmungsöffnungen eine Luftströmung die Einlassöffnung umgebend direkt in den Backraum bewirken.

Um die Verteilung der brennenden Holzbrennstoffstücke im Backraum beeinflussen zu können ist es weiterhin vorteilhaft, wenn in der Luftströmung des Gebläses Strömungsleiteinrichtungen angeordnet sind, mit denen die Luftströmung zumindest teilweise umgelenkt werden kann. Das heißt, dass die Strömungsleiteinrichtungen bei entsprechender Betätigung die Luftströmung beeinflussen können, so dass eine unterschiedliche Flugbahn der brennenden Holzbrennstoffstücke erreicht wird. Dies können sowohl bewegliche bzw. verstellbare Leitbleche oder dergleichen sein als auch ebenso mittels Öffnen und Schließen von Luftströmungsöffnungen erfolgen.

Die Zufuhr des zu verbrennenden Holzbrennstoffs kann in vorteilhafter Weise unter Einsatz eines Schneckenförderers als zweite Fördervorrichtung erfolgen. Hierbei ist dem Schneckenförderer eine Dosiervorrichtung vorzuschalten, mittels derer eine geregelte Zufuhr der Holzbrennstoffstücke aus dem Brennstoffvorrat möglich ist. Somit kann die zu verbrennende Menge an Holzbrennstoff festgelegt werden und es wird ein kontrolliertes Einbringen der Holzbrennstoffstücke in die Backofenvorrichtung sichergestellt.

Bei einer Störung im Rauchgaskanal (bzw. durch eine fehlerhafte Steuerung einer Rauchgasklappe) oder eines unzulässigen Verschlusses der Rauchgasöffnung des Backraums (bzw. durch die eingeschobenen Teiglinge) bei einem laufenden Gebläse als erste Fördervorrichtung ist ein Rückschlagen der Flammen aus der Zündkammer in die Zufuhr der Holzbrennstoffstücke nicht unmittelbar ausgeschlossen. Daher ist es vorteilhaft, wenn zumindest ein Abschnitt der Zuleitung vom Brennstoffvorrat zur Zündkammer thermisch derart instabil ausgeführt ist, dass bei auftreten einer erhöhten Temperatur, vorzugsweise unterhalb der Zündtemperatur der Holzbrennstoffstücke, sich die Zuleitung derart deformiert, dass ein weiterer Transport von Holzbrennstoffstücken ausgeschlossen ist. Hierbei kann vorgesehen sein, dass die Zuleitung (vorzugsweise aus Kunststoff) ohne Flammen weg schmilzt, sich einschnürt oder zerreist.

Zur Gewährleistung einer hohen Sicherheit ist es weiterhin vorteilhaft, wenn zwischen Dosiervorrichtung und Schneckenförderer und/oder zwischen Schneckenförderer und Zündkammer eine verstellbare erste Schließeinrichtung angeordnet ist. Diese Schließeinrichtung ist zwingender Weise beim Transport von Holzbrennstoffstücken zu öffnen, verhindert jedoch im geschlossenen Zustand bei stehendem Materialfluss ein Eindringen von Flammen aus der Zündkammer in den Holzbrennstoffstückvorrat.

Weiterhin ist es vorteilhaft, wenn zwischen Zündkammer und Backraum eine verstellbare zweite Schließeinrichtung angeordnet wird. Diese ist derart auszuführen, dass das Eindringen von Kondensat in die Zündkammer bzw. ein Niederschlagen von Kondensat in der Zündkammer durch Anordnung der zweiten Schließeinrichtung in der Schließstellung im Wesentlichen ausgeschlossen werden kann. Wenngleich die Zündkammer im Verhältnis zu den vorgelagerten Vorrichtungen zur Zufuhr des stückigen Holzbrennstoffs eine höhere Temperatur aufweist, so weist diese nach Beendigung des Aufheizprozesses eine rasch steigende Temperaturdifferenz zum unvermindert heißen Backraum auf.

Gleichfalls, wie bei zweiter Schließvorrichtung, bietet der Einsatz der ersten Schließvorrichtung zwischen Dosiervorrichtung und Schneckenförderer bzw. zwischen Schneckenförderer und Zündkammer den Vorteil, dass sich im Holzbrennstoffvorrat bzw. im Bereich vor der ersten Schließeinrichtung nach Beendigung des Aufheizvorgangs kein Kondensat ansammeln kann.

Die Betätigung der ersten und/oder zweiten Schließeinrichtung kann in einer Ausführungsform mittels einer Steuerung auf Grundlage des Aufheiz- und Backprozesses erfolgen. Beispielsweise kann die zweite Schließeinrichtung nach Abbrand der letzten Holzbrennstoffstücke und/oder beim Öffnen der Ofentür geschlossen werden. Ebenso kann vorgesehen sein, dass die erste und/oder zweite Schließeinrichtung in Abhängigkeit vom Betrieb der ersten und/oder zweiten Fördervorrichtung geschlossen ist, d.h. bei Betrieb der jeweiligen Fördervorrichtung geöffnet wird und ansonsten geschlossen ist. Ebenso ist es möglich, eine Sensorüberwachung vorzusehen, welche bei Feststellung eines Gefahrenzustands einen unmittelbaren Stopp der Zufuhr an stückigem Holzbrennstoff vornimmt und hierbei eine Schließung der Schließeinrichtung bewirkt. Dies kann beispielsweise eine Messung der Temperatur im Schneckenförderer oder der Dosiervorrichtung oder ein sonstiger Brandsensor sein.

Eine wirtschaftliche Betriebsweise unter Berücksichtigung der Entzündung der eingeförderten Holzbrennstoffstücke wird vorteilhaft ermöglicht, wenn die Backofenvorrichtung einen Flammensensor umfasst. Dieser ist derart auszulegen, dass ein Abbrennen von brennenden Holzbrennstoffstücken vor deren Förderung in den Backraum festgestellt werden kann. Da ausschließlich brennende Holzbrennstoffstücke in den Backraum befördert werden sollen und ein Transport von nichtentzündeten Holzbrennstoffstücke in den Backraum zu vermeiden ist, ist zunächst sicherzustellen, dass die Holzbrennstoffstücke vor dem Transport durch die erste Fördervorrichtung entzündet wurden, d.h. brennen.

Wenngleich mittels der Zündvorrichtung weitgehend eine Entzündung sämtlicher Holzbrennstoffstücke möglich wäre, ist diese Vorgehensweise aufgrund des zusätzlichen Energieverbrauchs für die Zündvorrichtung unwirtschaftlich und sollte daher ausschließlich zur Entzündung der Holzbrennstoffstücke zu Beginn des Aufheizprozesses beschränkt sein. Bei Verwendung einer Zündkammer ist daher besonders vorteilhaft, wenn mittels des Flammensensors festgestellt werden kann, ob die in der Zündkammer befindlichen Holzbrennstoffstücke ohne Einsatz der Zündvorrichtung brennen und folglich kein weiterer Einsatz der Zündvorrichtung erforderlich ist.

Zur wirtschaftlichen Herstellung von Holzofenbrot ist es weiterhin vorteilhaft, wenn in einem Rauchgaskanal im Anschluss an die Rauchgasöffnung eine Wärmerückgewinnungseinrichtung zur Nutzung der im Rauchgas enthaltenen Abwärme vorgesehen ist. Die erforderliche Herstellungsweise von Holzofenbrot erfordert einen unverhältnismäßig hohen Verbrauch von Primärenergie unter Verlust von Abwärme mit hohen Rauchgastemperaturen. Durch den Einsatz einer Wärmerückgewinnungseinrichtung, beispielsweise zur Erwärmung von Brauchwasser, kann die Wirtschaftlichkeit deutlich verbessert werden.

Zur Ermöglichung eines konstanten Prozesses in der Zufuhr und dem Abbrennen der Holzbrennstoffstücke ist es weiterhin besonders vorteilhaft, wenn in einem Rauchgaskanal hinter der Rauchgasöffnung eine Rauchgassteuerungsvorrichtung vorgesehen ist. Hierbei ist die Rauchgassteuerungsvorrichtung derart auszulegen, dass die Rauchgasströmung aktiv oder passiv beeinflussbar ist. Die Rauchgassteuerungsvorrichtung kann beispielsweise eine Kaminklappe zur Drosselung der Rauchgasströmung im Rauchgaskanal oder ein aktiver gesteuerter Ventilator sein. Hierbei ist es weiterhin vorteilhaft, wenn eine Steuerungsvorrichtung vorhanden ist, mit der die Rauchgassteuerungsvorrichtung gesteuert oder geregelt werden kann. Hierbei kann die Steuerungsvorrichtung wahlweise anhand von vorgegebenen oder von einstellbaren Parametern geregelt werden. Bei den Parametern kann es sich insbesondere um den gewünschten Aufheizgrad zur Aufheizung der Wandung des Backraums und um eine Solltemperatur, auf die der Backraum bzw. die Wandung des Backraums aufzuheizen ist, handeln. Die Steuerungsvorrichtung kann die Rauchgassteuerungsvorrichtung unter Berücksichtigung der Zufuhr von stückigem Holzbrennstoff beeinflussen. Hierbei ist es vorteilhaft, wenn die Steuerungsvorrichtung die erste und gegebenenfalls die zweite Fördervorrichtung und gegebenenfalls die Dosiervorrichtung steuern kann, so dass die Einbringung der brennenden Holzbrennstoffstücke in den Backraum vorteilhaft beeinflusst bzw. mehr oder weniger Energie in den Backraum eingebracht werden kann.

Weiterhin kann durch die Rauchgassteuerungsvorrichtung die Verteilung der brennenden Holzbrennstoffstücke im Backraum beeinflusst werden. Insbesondere bei gemeinsamer Steuerung des Gebläses als erste Fördervorrichtung sowie der Rauchgassteuerungsvorrichtung kann durch die einhergehende Beeinflussung der Luftströmung eine Verteilung der brennenden Holzbrennstoffstücke im Backraum zwischen der Einlassöffnung und der gegenüberliegenden Ofentür bzw. der Rauchgasöffnung erreicht werden.

Weiterhin ist es vorteilhaft, wenn die Backofenvorrichtung hinsichtlich des Backraums symmetrisch ausgeführt wird. Hierzu weist der Backraum zwei über die Mitte des Backraums in einem hinteren Wandabschnitt angeordnete Einlassöffnungen sowie zwei symmetrisch über die Mitte des Backraums in seitlichen Wandabschnitten gegenüberliegende Rauchgasöffnungen auf. Ob die Zufuhr aus dem Holzbrennstoffvorrat mittels einer Dosiervorrichtung oder zwei getrennter Dosiervorrichtungen erfolgt ist hierbei nebensächlich, wobei zumindest in vorteilhafter Weise vor jeder eine Zündvorrichtung zur Entzündung der Holzbrennstoffstücke angeordnet ist sowie eine Einlassöffnung und jeweils eine erste Fördervorrichtung die Einbringung der brennenden Holzbrennstoffstücke in den Backraum bewirkt. Die Ableitung des Rauchgases über die beiden Rauchgasöffnungen kann hierbei sowohl mit getrennten Rauchgaskanälen erfolgen als auch ebenso in vorteilhafter Weise über sich vereinigende Rauchgaskanäle, so dass insbesondere nur eine Rauchgassteuerungsvorrichtung für den gemeinsamen Rauchgaskanalabschnitt notwendig ist.

In den nachfolgenden Figuren wird eine beispielhafte Ausführungsform für eine erfindungsgemäße Backofenvorrichtung skizziert.

Es zeigen:
- Fig. 1: eine perspektivische Ansicht auf eine beispielhafte Ausführungsform einer Backofenvorrichtung;
- Fig. 2: den Backraum mit dessen Wandung;
- Fig. 3: die Zündkammer mit erster Fördervorrichtung;
- Fig. 4: die Zündkammer;
- Fig. 5: den Kammerflansch der Zündkammer;
- Fig. 6: das Gebläse als erste Fördervorrichtung;
- Fig. 7: die Zündvorrichtung;
- Fig. 8: den Flammsensor;
- Fig. 9: die zweite Fördervorrichtung als Schneckenförderer;
- Fig. 10: das zugehörige Schneckenrohr mit Dosieranschlussstutzen;
- Fig. 11: einen perspektivischen Schnitt zur Ansicht aus Fig. 3;
- Fig. 12: einen Querschnitt der Backofenvorrichtung.

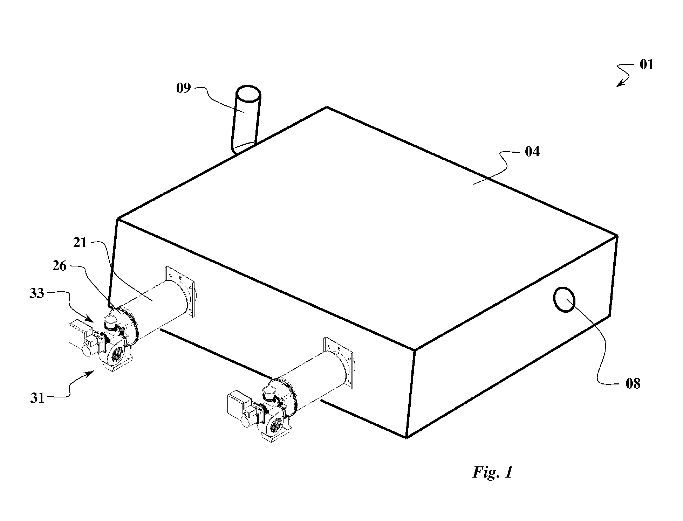

In der **Figur 1** ist ein Beispiel für eine erfindungsgemäße Backofenvorrichtung 01 skizziert. Zu erkennen ist die Wandung 04 des Backraums 03, welcher im Wesentlichen eine rechteckige Grundfläche bei geringer Höhe aufweist (wie dies für Backöfen zum Backen von Brot oder dergleichen üblich ist). Auf der sichtbaren Rückseite der Backofenvorrichtung 01 befindet sich jeweils eine Einlassöffnung 07, vor der jeweils eine Zündkammer 11 angeordnet ist. Diese Zündkammer 11 wird von einem Kammerinnenzylinder 12 gebildet und ist außenseitig von einem Kammeraußenrohr 21 umgeben. Den Abschluss bildet hierbei der Kammerflansch 26, welcher die Schnittstelle und Aufnahme zu den weiteren Komponenten darstellt. Hierzu gehört insbesondere das Gebläse 31 als erste Fördervorrichtung als sowie der Schneckenförderer 33 als zweite Fördervorrichtung. Weiterhin ist eine symmetrische Anordnung von Rauchgasöffnungen 08 vorhanden, an denen sich jeweils ein Rauchgaskanal 09 (nur linke Seite dargestellt) anschließt.

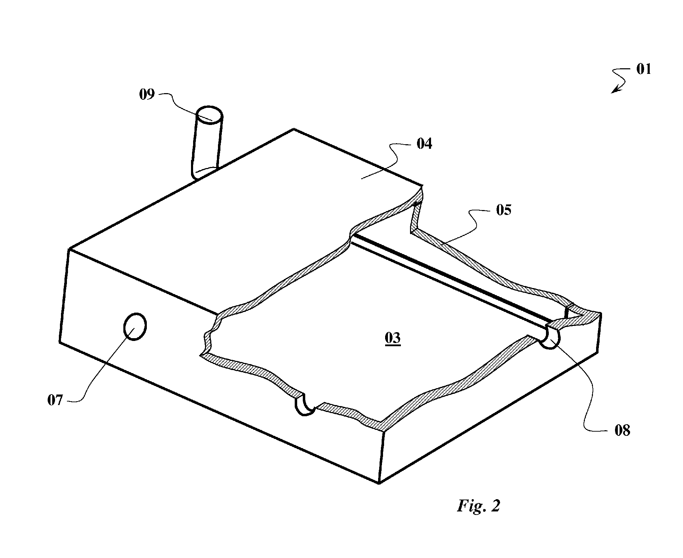

In der **Figur 2** wird der Backraum 03 mit dessen Wandung 04 skizziert. Nunmehr zu erkennen ist weiterhin die Ofentür 05 auf der Vorderseite der Backofenvorrichtung 01. An der Rückseite befinden sich die Einlassöffnungen 07, durch die die brennenden Holzbrennstoffstücke 43 eingebracht werden können. Gegenüberliegend befinden sich die Rauchgasöffnungen 08 mit dem Rauchgaskanal 09.

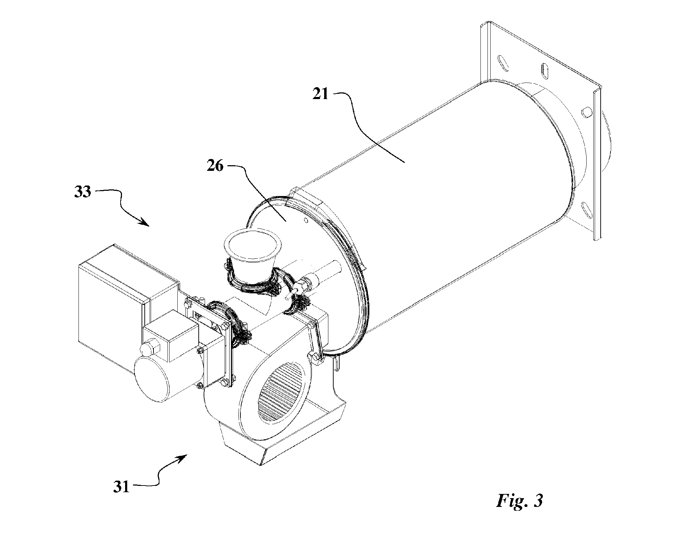

In der **Figur 3** wird aus der Fig. 1 die Zündkammer 11 mit dem Gebläse 31 als erste Fördervorrichtung und Schneckenförderer 33 als zweite Fördervorrichtung in vergrößerter Darstellung gezeigt, wobei zur weiteren Erläuterung auf die nachfolgenden Figuren verwiesen wird.

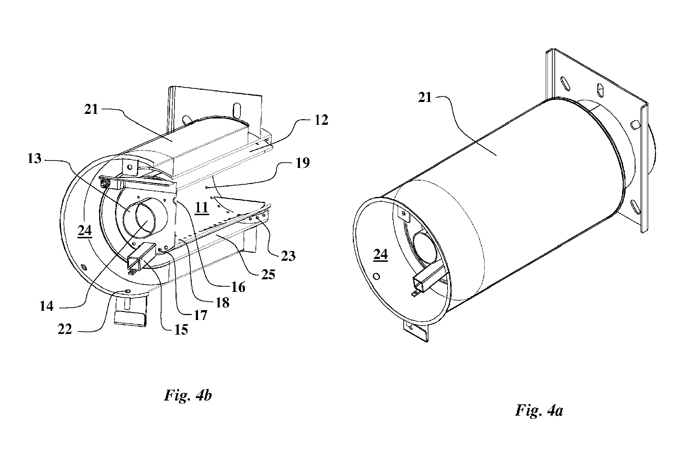

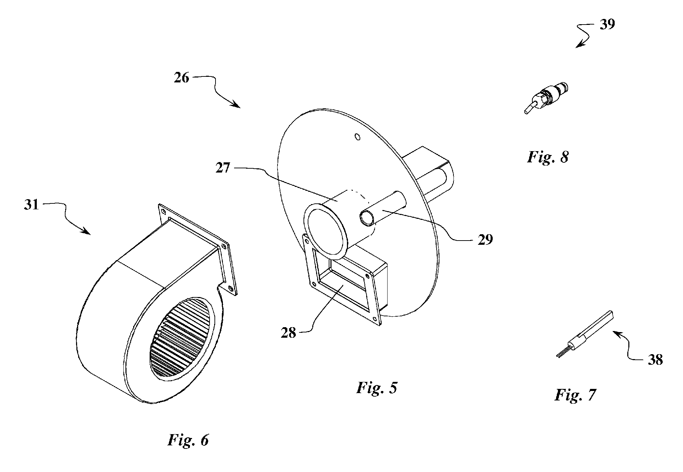

In den **Figuren 4a** und **4b** wird die Zündkammer 11 nebst umgebendem Bauraum skizziert. Zu erkennen ist neben der sich im Inneren befindenden Zündkammer 11 die eingangsseitig angeordnete Zuführöffnung 14, durch die die Einbringung des noch nicht brennenden stückigen Holzbrennstoffs 41 erfolgen kann. Die Zündkammer 11 wird gebildet von dem Kammerinnenzylinder 12, welcher auf einer dem Backraum 03 abgewandten Stirnseite weiterhin eine Zünderaufnahme 15 sowie eine Sensoröffnung 16 und erste Luftströmungsöffnungen 17 aufweist. Den Kammerinnenzylinder 12 umgibt mit einem Abstand unter Bildung eines zweiten Luftverteilraums 25 ein wärmegedämmtes Kammeraußenrohr 21. Vor dem Kammerinnenzylinder 12 befindet sich weiterhin der erste Luftverteilraum 24. Die durch das Gebläse zugeführte Luft verteilt sich zunächst im Luftverteilraum 24 und wird von hier aus durch die Zünderaufnahme 15 als zugleich erste Luftströmungsöffnung sowie die ersten Luftströmungsöffnungen 17 geführt. Diese Luftströmung bewirkt primär den Transport der brennenden Holzbrennstoffstücke 43 in freiem Flug in den Backraum 03. Dies wird unterstützt durch eine Luftströmung, welche sich bildet durch die unterseitigen zweiten Luftströmungsöffnungen 18, welche eine Auflockerung der sich in der Zündkammer 11 befindenden brennenden Holzbrennstoffstücke 43 bewirkt. Zur Verhinderung eines Anschlagens von brennenden Holzbrennstoffstücken 43 im Transport durch die vom Gebläse erzeugten Luftströmung am Kammerinnenzylinder 12 sind endseitig auf der zum Backraum 03 weisenden Seite im Kammerinnenzylinder 12 radial dritte Luftströmungsöffnungen 19 eingebracht. Diese Luftströmung bewirkt in erster Näherung eine Zentrierung der sich im freien Flug befindlichen brennenden Holzbrennstoffstücke 43 bei Durchqueren der Einlassöffnung 07 in den Backraum 03. Die weitere Verteilung sowie Sicherstellung der notwendigen Luftzufuhr der im Backraum 03 abbrennenden Holzbrennstoffstücke 43 kann durch vierte Luftströmungsöffnungen 23 beeinflusst werden. In der Zünderaufnahme 15 wird die Zündvorrichtung 38 - siehe Fig. 7 - eingesetzt, welche eine kontaktlose Entzündung von eingebrachten Holzbrennstoffstücken 41 bewirken kann.

In der **Figur 5** ist der zum Kammeraußenrohr 21 gehörende Kammerflansch 26 dargestellt. Dieser weist zentrisch einen Schneckenrohrabschnitt 27 auf, welcher Bestandteil des Schneckenförderers 33 als zweite Fördervorrichtung ist. Weiterhin umfasst der Kammerflansch 26 einen Gebläsestutzen 28, an dem das in Fig. 6 dargestellte Gebläse 31 angeflanscht werden kann. Somit wird ein ungehindertes Einströmen großer Luftmengen in den ersten Luftverteilraum 24 durch den Gebläsestutzen 28 ermöglicht. Weiterhin weist der Kammerflansch 26 eine Sensoraufnahme 29 zur Aufnahme des Flammsensors 39 - siehe Fig. 8 - auf.

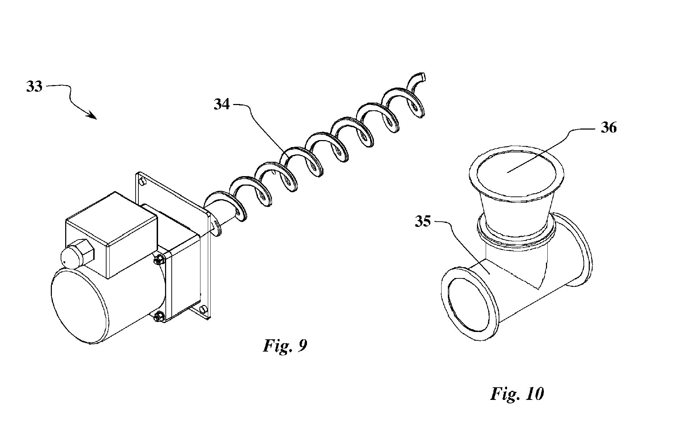

In der **Figur 9** ist die Förderschnecke 34 des Schneckenförderers 33 als zweite Fördervorrichtung dargestellt, wobei das zugehörige Schneckenrohr 35 in **Figur 10** dargestellt ist. Am Schneckenrohr 35 ist oberseitig der Dosieranschlussstutzen 36 angeordnet um den Materialtransport der Holzbrennstoffstücke 41 zum Schneckenförderer 33 zu ermöglichen.

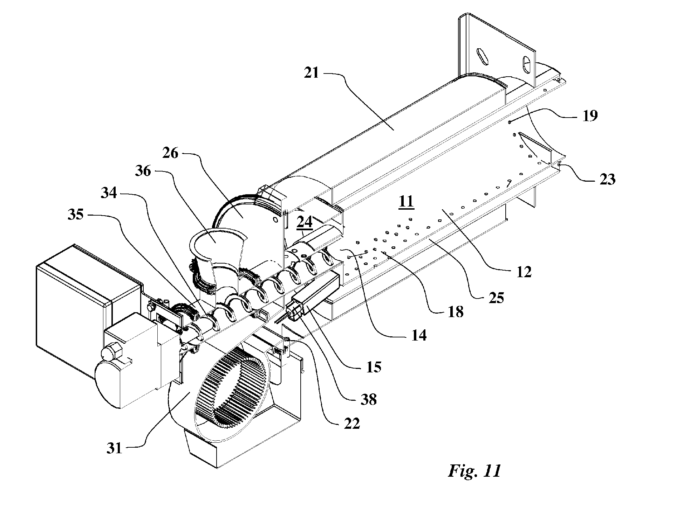

In der **Figur 11** ist nochmals die Ansicht aus Fig. 3 im Schnitt dargestellt. Zu erkennen ist die Zündkammer 11 mit dem Kammerinnenzylinder 12 und dem umgebenden Kammeraußenrohr 21 und dem vorderseitig abschließendem Kammerflansch 26. Zwischen Kammerflansch 26 und Kammerinnenzylinder 12 befindet sich der erste Luftverteilraum 24 zur Verteilung der vom Gebläse 31 erzeugten Luftströmung auf die Luftströmungsöffnungen 17, 18 und 19, 23. Unterseitig sind wieder die zweiten Luftströmungsöffnungen 18 und endseitig auf der zum Brennraum 03 weisenden Seite ringförmig umgebend die dritten Luftströmungsöffnungen 19 zu erkennen. Dem ersten Luftverteilraum 24 schließt sich der den Kammerinnenzylinder 12 umgebende zweite Luftverteilraum 25 an, an dessen Ende vierte Luftströmungsöffnungen 23 zur direkten Einblasung von Luft in den Backraum 03 angeordnet sind. Die Zufuhr von stückigem Holzbrennstoff 41 erfolgt durch den Dosieranschlussstutzen 36, wobei die Holzbrennstoffstücke 41 durch den Schneckenförderer 33 mittels der Förderschnecke 34, umgeben vom Schneckenrohr 35, in die Zündkammer 11 befördert werden können.

Die Entzündung der zunächst eingebrachten Holzbrennstoffstücke 41 erfolgt mittels der Zündvorrichtung 38, welche sich im Luftverteilraum 24 in der Zünderaufnahme 15 befindet. Im Luftverteilraum 24 ist weiterhin unterseitig eine Kondensatöffnung 22 angeordnet, welche sicherstellen soll, dass sich nach Beendigung des Aufheizprozesses in der Zündkammer 11 bzw. im ersten Luftverteilraum 24 oder zweiten Luftverteilraum 25 sammelndes Kondensat abgeführt werden kann.

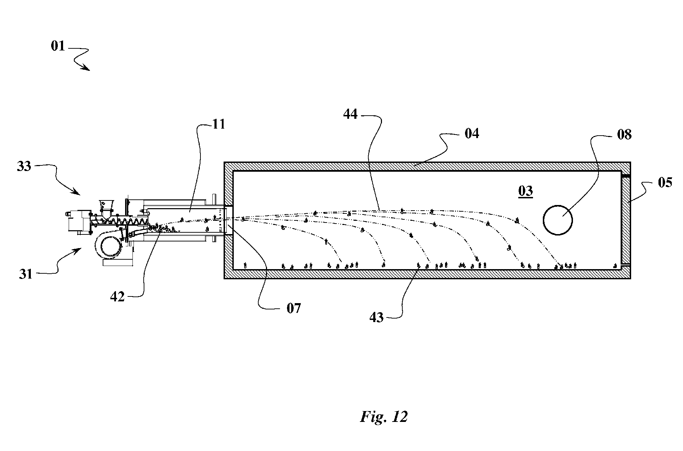

In der **Figur 12** wird im Querschnitt die in Fig. 1 skizzierte Backofenvorrichtung 01 zur Erläuterung des Transports der Brennstoffstücke 41, 43 schematisch skizziert. Zu erkennen ist wiederum der Backraum 03 mit umgebender Wandung 04 und vorderseitig angeordneter Ofentür 05. Der Backraum 03 weist hierbei rückseitig eine Einlassöffnung 07 zur Einbringung der brennenden Holzbrennstoffstücke 43 sowie eine Rauchgasöffnung 08 zur Abfuhr der Verbrennungsgase auf. Der Transport der Holzbrennstoffstücke 41 erfolgt durch den Dosiertrichter zum Schneckenförderer 33, welcher das Material in die Zündkammer 11 befördert. In der Zündkammer 11 bildet sich eine Pelletanhäufung 42 gebildet von nicht brennenden Holzpellets 41 sowie brennenden Holzpellets 43. Der Transport der brennenden Holzpellets 43 von der Pelletanhäufung 42 in den Backraum 03 erfolgt unter Zuhilfenahme des Gebläses 31 als erste Fördervorrichtung, wobei die brennenden Holzpellets 43 auf einer Flugbahn 44 im freien Flug von der Zündkammer 11 in den Backraum 03 befördert werden. Die am Boden des Backraums 03 verteilten brennenden Holzpellets 43 können dort vollständig abbrennen. Durch die bei der Verbrennung frei werdende Wärmeenergie heizt sich die Wandung 04 des Backraums 03 auf, womit nach Beendigung des Aufheizprozesses das Backen von Holzofenbrot ermöglicht wird.

## Patentansprüche

1. Backofenvorrichtung (01) zum Backen von Holzofenbrot, mit einem Backraum (03), dessen Wandung (04) zumindest zum überwiegenden Teil von einem steinernen oder steinartigen Material gebildet wird, wobei der Backraum (03) durch die bei der Verbrennung von stückigem Holzbrennstoff (41) entstehenden Flammen und Rauchgase unmittelbar beheizt werden kann, und wobei der Backraum (03) zumindest eine Ofentür (05) aufweist, durch die die Brotteiglinge in den Backraum (03) eingebracht werden können, und wobei der Backraum (03) zumindest eine Rauchgasöffnung (08) aufweist, durch die verbrauchtes Rauchgas aus dem Backraum (03) abgeleitet werden kann,
**dadurch gekennzeichnet,**
**dass** die Backofenvorrichtung (01) eine Zündvorrichtung (38) umfasst, mit der die Holzbrennstoffstücke (42) zumindest beim Anheizen der Backofenvorrichtung (01) entzündet werden können, und wobei die Backofenvorrichtung (01) eine Fördereinrichtung (31) umfasst, mittels der die entzündeten Holzbrennstoffstücke (43) im brennenden Zustand durch eine Einlassöffnung (07) in den Backraum (03) eingefördert und/oder verteilt werden können.

2. Backofenvorrichtung (01) nach Anspruch 1,
**dadurch gekennzeichnet,**
**dass** vor der Einlassöffnung (07) eine Zündkammer (11) angeordnet ist, wobei die Holzbrennstoffstücke (41) von einer zweiten Fördervorrichtung (33) aus einem Brennstoffvorrat in die Zündkammer (11) eingefördert werden können, und wobei die Holzbrennstoffstücke (41) in der Zündkammer (11), insbesondere unter Verwendung eines kontaktlosen Keramikanzünders, entzündet werden können, und wobei die brennenden Holzbrennstoffstücke (43) von der ersten Fördervorrichtung (31) aus der Zündkammer (11) in den Backraum (03) eingefördert werden können.

3. Backofenvorrichtung (01) nach Anspruch 1 oder 2,
**dadurch gekennzeichnet,**
**dass** die erste Fördervorrichtung (31) ein Gebläse ist, durch deren Luftströmung die brennenden Holzbrennstoffstücke (43) in den Backraum (03) geblasen werden können, wobei in der Luftströmung des Gebläses (31) Strömungsleiteinrichtungen angeordnet sind, mit denen die Luftströmung zumindest teilweise umgelenkt werden kann.

4. Backofenvorrichtung (01) nach Anspruch 2 oder 3,
**dadurch gekennzeichnet,**
**dass** die zweite Fördervorrichtung (33) ein Schneckenförderer ist, an dem eine Dosiervorrichtung zur geregelten Zufuhr der Holzbrennstoffstücke (41) aus einem Brennstoffvorrat angeordnet ist.

5. Backofenvorrichtung (01) nach Anspruch 4,
**dadurch gekennzeichnet,**
**dass** zwischen Dosiervorrichtung und Schneckenförderer (33) und/oder zwischen Schneckenförderer (33) und Zündkammer (11) eine verstellbare erste Schließeinrichtung angeordnet ist, wobei das Eindringen von Flammen aus der Zündkammer (11) in den Holzbrennstoffstückvorrat durch Anordnung der ersten Schließeinrichtung in ihrer Schließstellung ausgeschlossen werden kann.

6. Backofenvorrichtung (01) nach einem der Ansprüche 2 bis 5,
**dadurch gekennzeichnet,**
**dass** zwischen Zündkammer (11) und Backraum (03) eine verstellbare zweite Schließeinrichtung angeordnet ist, wobei das Eindringen von Kondensat in die Zündkammer (11) durch Anordnung der zweiten Schließeinrichtung in ihrer Schließstellung ausgeschlossen werden kann.

7. Backofenvorrichtung (01) nach einem der Ansprüche 1 bis 6,
**dadurch gekennzeichnet,**
**dass** die Backofenvorrichtung (01) einen Flammensensor (39) umfasst, mit dem der Abbrand der brennenden Holzbrennstoffstücke (43) vor deren Förderung in den Backraum (03), insbesondere in der Zündkammer (11), festgestellt werden kann.

8. Backofenvorrichtung (01) nach einem der Ansprüche 1 bis 7,
**dadurch gekennzeichnet,**
**dass** in einem Rauchgaskanal (09) hinter der Rauchgasöffnung (08) eine Wärmerückgewinnungseinrichtung zur Nutzung der im Rauchgas enthaltenen Abwärme vorgesehen ist.

9. Backofenvorrichtung (01) nach einem der Ansprüche 1 bis 8,
**dadurch gekennzeichnet,**
**dass** in einem Rauchgaskanal (09) hinter der Rauchgasöffnung (08) eine Rauchgassteuervorrichtung, insbesondere eine Kaminklappe oder ein Ventilator, vorgesehen ist, mit der die Rauchgasströmung beeinflussbar ist.

10. Backofenvorrichtung (01) nach Anspruch 9,
**dadurch gekennzeichnet,**
**dass** eine Steuerungsvorrichtung vorgesehen ist, mit der die Rauchgassteuervorrichtung anhand von vorgegebenen oder einstellbaren Parametern, insbesondere einer Aufheizrate und einer Solltemperatur, gesteuert oder geregelt werden kann.

11. Backofenvorrichtung (01) nach einem der Ansprüche 1 bis 10,
**dadurch gekennzeichnet,**
**dass** zwei symmetrisch über eine Mitte des Backraums (03) in einem hinteren Wandabschnitt angeordnete Einlassöffnungen (07) und zwei symmetrisch über eine Mitte des Backraums (03) in seitlichen Wandabschnitten gegenüberliegende Rauchgasöffnungen (08) vorhanden sind.

12. Verfahren zur Aufheizung einer Backofenvorrichtung (01) zum Backen von Holzofenbrot, mit einem Backraum (03), dessen Wandung (04) zumindest zum überwiegenden Teil von einem steinernen oder steinartigen Material gebildet wird, unter Verwendung von stückigem Holzbrennstoff (41), mit den Schritten:
- Förderung von Holzbrennstoffstücken (41) aus einem Holzbrennstoffvorrat zu einer Zündvorrichtung (38) mittels einer Fördervorrichtung (33),
- zumindest zu Beginn des Aufheizprozesses Entzündung der Energieträger mittels der Zündvorrichtung (38), wobei nachfolgende Holzbrennstoffstücke (41) von der Zündvorrichtung (38) und/oder von vorhergehenden bereits brennenden Holzbrennstoffstücken (43) entzündet werden,
- Förderung der entzündeten Holzbrennstoffstücke (43) mittels einer Fördervorrichtung (31) durch eine Einlassöffnung (07) in den Backraum (03),
- Abbrand der Holzbrennstoffstücke (43) im Backraum (03), wobei der Backraum (03) durch die beim Abbrand entstehenden Flammen und Rauchgase beheizt wird,
- Abfuhr der Rauchgase aus dem Backraum (03) durch eine Rauchgasöffnung (08).

13. Verfahren nach Anspruch 12,
**dadurch gekennzeichnet,**
**dass** nach der Zündung der ersten Holzbrennstoffstücke (41) eine Haufenbildung (42) von brennenden Holzbrennstoffstücken (43) stattfindet, und weitere ungezündete Holzbrennstoffstücke (41) von der Fördervorrichtung (33) auf den Haufen (42) der bereits brennenden Holzbrennstoffstücke (43) gefördert und hier von den bereits brennenden Holzbrennstoffstücke (43) entzündet werden.

14. Verfahren nach Anspruch 12 oder 13,
**dadurch gekennzeichnet,**
**dass** die jeweils oberste Schicht vom Haufen (42) der brennenden Holzbrennstoffstücke (43) mittels einer Druckluftströmung in den Backraum (03) eingeblasen wird.

15. Verfahren nach einem der Ansprüche 12 bis 14,
**dadurch gekennzeichnet,**
**dass** eine Steuerungsvorrichtung eine Rauchgassteuervorrichtung derart regelt, dass der Backraum (03) mit einer Aufheizrate im Bereich von 1 Kelvin/min bis 2 Kelvin/min, insbesondere mit 1,5 Kelvin/min, aufgeheizt wird.
